Europäisches Patentamt

European Patent Office

Office européen des brevets

(19)

(11) **EP 1 564 913 A2**

(12) **EUROPEAN PATENT APPLICATION**

(43) Date of publication:
**17.08.2005 Bulletin 2005/33**

(51) Int Cl.⁷: **H04B 10/08**, H04B 10/12

(21) Application number: **05250564.1**

(22) Date of filing: **02.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **11.02.2004 US 776832**

(71) Applicant: **CORNING INCORPORATED**
**Corning, NY 14831 (US)**

(72) Inventors:
• **Evans, Alan Frank**
  **Beaver Dams New York 14812 (US)**
• **Sudarshanam, Venkatapuram**
  **Big Flats New York 14814 (US)**
• **Gray, Stuart**
  **Corning New York 14830 (US)**

(74) Representative: **Boon, Graham Anthony**
  **Elkington and Fife LLP,**
  **Prospect House,**
  **8 Pembroke Road**
  **Sevenoaks, Kent TN13 1XR (GB)**

(54) **Active fiber loss monitor and method**

(57) A system (10) for detecting a small fiber loss (102) on a fiber (104) includes a first channel (106) having a first wavelength coupled to the fiber (104). A second channel (108) having a second wavelength different than the first wavelength is also coupled to the fiber (104). At least one photodetector circuitry (110) is coupled to the fiber (104) at a monitor point (112) for detecting a change in the power ratio between the first and second channels for detecting the small fiber communication loss (102) at any location along the fiber (104).

FIG. 1

EP 1 564 913 A2

**Description**

**BACKGROUND OF THE INVENTION**

FIELD OF THE INVENTION

The present invention relates generally to optical fiber communication, and particularly to fiber fault detection in optical fiber communication.

TECHNICAL BACKGROUND

Optical fiber communication networks use optical fibers to carry data in the form of optical signals at high data rates with very good signal quality. Signal quality can be degraded by naturally-occurring loss events such as aging and other component failures, for example. In a network, optical signals are generated by transmitters and sent over optical fibers to receivers.

Network security has become increasingly important. Unfortunately, optical fibers can be vulnerable to intrusion. For example, an intruder can bend a single-mode or multi-mode optical fiber to tap a portion of light traveling through a fiber. The intruder can then intercept data traveling in the optical signals carried by an optical fiber without causing a significant signal loss at a receiver. In this way, the security of a network can be compromised at a fiber link without anyone realizing it.

Current commercial, in-field optical monitoring uses a *single* optical supervisory channel (OSC) at a wavelength of 1510 nm (typically for the C-band of erbium amplification) or 1625 nm (typically for the L-band of erbium amplification). An inexpensive, broad wavelength spectrum Fabry-Perot laser at one of these wavelengths transmits information on the health of the transmission link between amplifier huts or nodes at a low data rate. At each set of pre and post amplifiers, the OSC signal is extracted with an optical filter at the input to the pre- amplifier, electronically detected and re-injected onto the fiber by an OSC filter at the amplifier output of the post amplifier thereby propagating in a feedforward direction. The functions of this supervisory channel are to check for optical continuity, to monitor power loss of the amplifiers and to transmit alarms of various kinds from previous network elements. An alarm would be triggered when the input OSC signal in the amplifier drops below a certain value, typically 1 dB, such that the receiver signal-to-noise ratio decreases and errors in the detected bits occur. Smaller changes in the channel power would not necessarily be alarmed since they do not impact the bit error rate or quality of the fiber.

Another commercially available network monitor gives the power spectrum of each channel. As optical transparency becomes introduced into systems via optical cross-connects, dynamic gain flattening filters, spectral power equalizers and fixed or variable wavelength add/drop nodes, full optical spectrum information becomes important. Knowledge of the spectrum insures reliable operation of any wavelength-dependent device or is used within a feedback control loop to control the power spectrum. There are various bulk optic or fiber-based commercial devices on the market to perform this function using Fabry-Perot cavities or diffraction gratings.

A third form of optical monitoring is optical time domain reflectometry (OTDR). OTDR uses the Rayleigh backscattering of a pulsed or temporally gated Fabry-Perot laser diode as a probe of distributed or discrete optical attenuation of the optical fiber. However, OTDRs are usually stand-alone instruments used by skilled technicians either during initial installation or fault location upon repair. Continuous, in-field OTDR monitoring is not typically done. One reason is that optical transmission links are usually uni-directional due to input and output isolators of the in-line optical amplifiers.

What is needed is an improved method and system for monitoring and managing optical fiber links. In particular, the integrity and quality of a fiber link needs to be monitored and managed cost-effectively.

**SUMMARY OF THE INVENTION**

One aspect of the invention is a method and system for detecting a small loss in an optical fiber which includes a first channel having a first wavelength coupled to the fiber. A second channel having a second wavelength different than the first wavelength is also coupled to the fiber. At least one photodetector circuitry is coupled to the fiber at a monitor point for detecting a change in the power ratio between the first and second channels for detecting the small fiber communication loss at any location along the fiber.

In another aspect, the present invention includes an OSC filter for the first or second channel.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present examples, taught in accordance with the present invention, and are intended to provide an overview or framework for understanding the nature and character of the invention as it is claimed. The accompanying drawings are included to provide a further understanding of the invention, and are incorporated into and constitute a part of this specification. The drawings illustrate various examples, taught in accordance with the invention, and together with the description serve to explain the principles and operations of the invention.

**BRIEF DESCRIPTION OF THE DRAWINGS**

FIG. 1 is a schematic view of one embodiment of the present invention;

FIG. 2 is a graph, showing the wavelength-dependent loss of a Coming single-mode fiber SMF28, as the power-ratio change basis for use with FIG. 1, in accordance with the present invention;

FIG. 3 is a schematic view of a second embodiment of the present invention within one amplifier hut, where a tap coupler 302 and filters 312 and 314, replace the OSC filters 312 of FIG. 1, to detect a power ratio change of in-band signals instead of out-band signals in FIG. 1;

FIG. 4, is a schematic view of a third embodiment of the present invention, where a feedforward detection monitoring path 404 is substituted for the feedbackward detection monitoring path 704 of FIG. 1;

FIG. 5 is a schematic view of a fourth embodiment of the present invention, where an OTDR backward path 504 is added to the feedforward detection path 404 of FIG. 4;

FIG. 6 is an exemplary power spectrum used with FIG. 1, in accordance with the present invention;

FIG. 7 is a schematic view of a fifth embodiment of the present invention, where bi-directional monitoring is taught in accordance with the present invention;

FIG. 8 is a schematic view of a sixth embodiment of the present invention, where circulators are used to simplify the bi-monitoring of FIG. 7 as taught in accordance with the present invention; and

FIG. 9 is a schematic view of a seventh embodiment of the present invention for routing a backscatter light, as taught in accordance with the present invention.

**DETAILED DESCRIPTION OF THE PREFERRED EMBODIMENTS**

Bending fiber is one mechanism for output coupling light for the purpose of intercepting information by an unauthorized user. Other naturally-occurring fiber loss events can also be wavelength dependent.

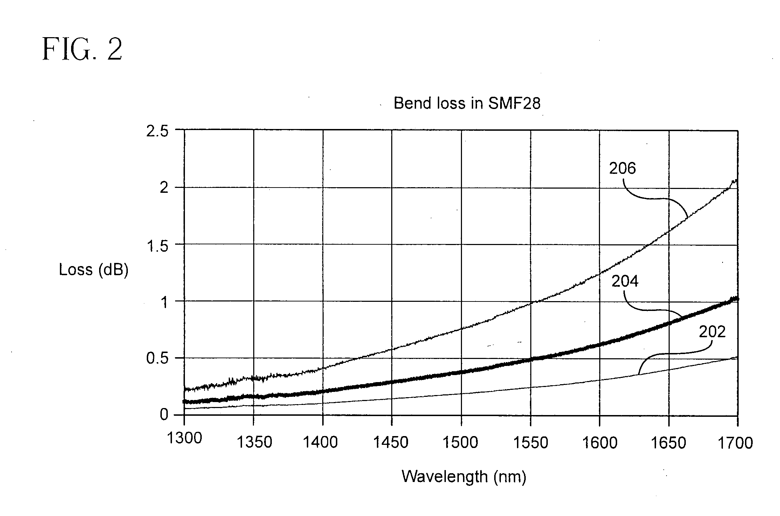

Referring to FIG. 2, the wavelength dependent loss from bending a fiber around a mandrel is graphed. Due to this wavelength dependence, the ratio of optical power at two different wavelengths can be continuously measured for any change and used as an indicator of fiber tapping or naturally-occurring event requiring further investigation. The wavelength dependent loss of a single-mode fiber such as a Coming SMF28 fiber wrapping around a metal mandrel is shown as an example. Mandrel radius and wrap angle (where one turn is 360 degrees) define the amount of loss which for this example was set to 0.25 (curve 202), 0.5 (curve 204) or 1 dB (curve 206) at 1550 nm wavelength by changing the angle. A change in radius will produce a similar monotonically-increasing loss with wavelength curve but with slightly different curvature. A multimode fiber or other types of suitable fiber would have other wavelength dependent loss values.

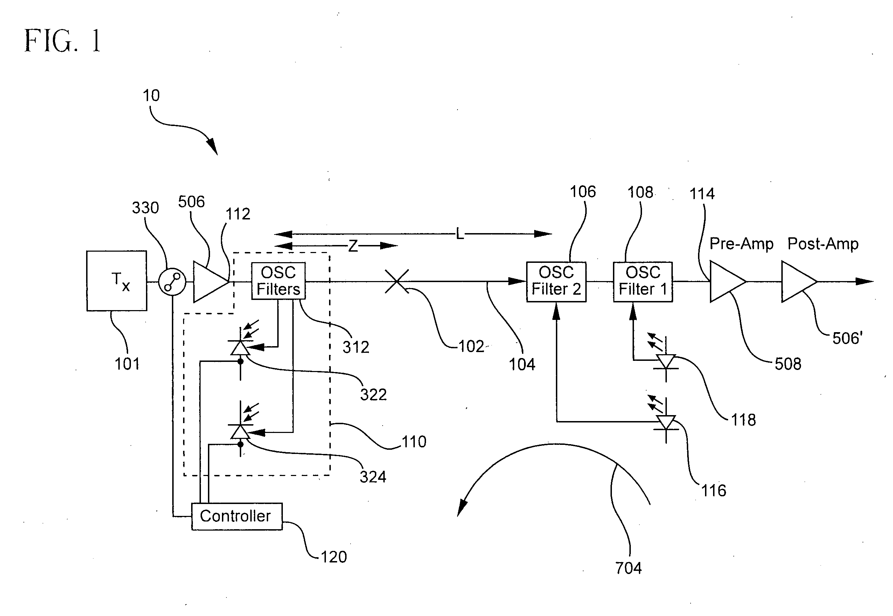

Reference will now be made in detail to the present preferred embodiments of the invention, examples of which are illustrated in the accompanying drawings. Whenever possible, the same reference numerals will be used throughout the drawings to refer to the same or like parts. One illustrative example of the system of the present invention is shown in FIG. 1, and is designated generally throughout by the reference numeral 10.

Referring to FIG. 1, a system 10 detects a small fiber loss 102 on a fiber 104 using a first channel 106 that is coupled to the fiber 104 and the first channel 106 has a first wavelength. A second channel 108 having a second wavelength different than the first wavelength is also coupled to the fiber 104. At least one photodetector circuitry 110 is coupled to the fiber 104 at a monitor node point 112 for detecting a change in the power ratio between the first and second channels for detecting the small fiber loss 102 at any location along the fiber 104. This power ratio change of a current value from a previous or threshold value, as detected by a controller 120 serves as part of a detector or detection circuitry, along with the photodetection circuitry 110 of FIG. 1.

Hence, in this system 10 having at least two nodes 112 and 114 connected by a fiber path 104, a method for detecting at one of the nodes 112 or 114 a small fiber loss condition in various configurations can be accomplished. The method includes the steps of generating a first marker wavelength and a second marker wavelength. At either node selected, the change in power ratio between the generated first marker wavelength and the second marker wavelength can be continuously monitored by the controller 120.

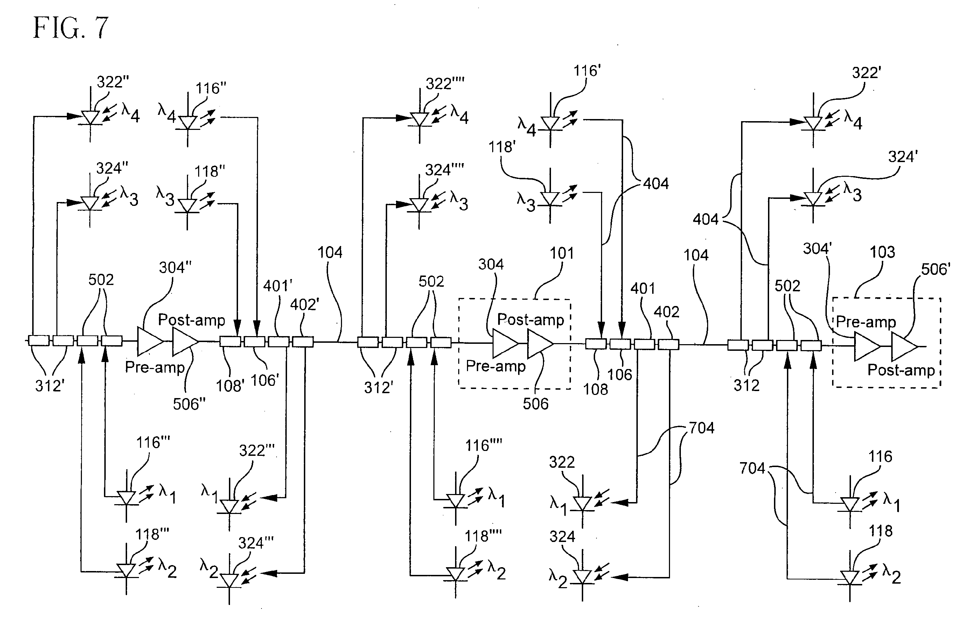

Any suitable optical fiber can be used as part of the fiber segment or link 104. There is a simple use of the system 10 to maintain the integrity of just a simple span of fiber 104 with a transmitter 101 upstream at one end and a receiver (not shown in FIG. 1 but can be represented with label 103 in FIG. 7) downstream at the other. Instead of using the system 10 to maintain the integrity of just a simple span of fiber 104 with a transmitter 101 at one end and a receiver (not shown) at the other, the system for detecting a fiber tap can also apply to systems with amplifiers.

If the system 10 of FIG. 1 is used in a long distance optical fiber network, optical power signals generally decrease with distance so that it is usually necessary to use in-line amplifiers to boost the optical signal power levels. To provide in-line amplification, erbium-doped fiber amplifiers (EDFAs) are most commonly employed. A set of pre and post amplifiers commonly form one EDFA. Generally, the optical fiber network includes a transmitting terminal 101 that could be at node 112, a transmission line, such as the fiber 104, and a receiving terminal at node 114. Alternatively, the system 10 may be part of a mesh network, a ring network, an add/drop linear chain, or other network configuration. Of course, the transmitting and receiving terminals, may each operate for both transmission and receiving using a two direction transmission line or a pair of transmission lines. Also, the transmission line or fiber 104 may include one or more optical fibers or optical fiber segments. A multichannel transmission terminal, such as in a wavelength division multiplex (WDM) system, provides a number of optical signals (or channels), each at a distinct wavelength. Any number of channels may be used, for example, 16 or 32 channels for different capacities.

The marker wavelength can be an OSC wavelength, an OTDR signal, or another guaranteed wavelength. At any suitable wavelength, the marker wavelength need only to be always present regardless of whether the data signals carrying the data on the fiber 104 are present or not, or whether the fiber link 104 in a multichannel optical system is operating at its minimum capacity, its maximum capacity, or an intermediate capacity between the minimum and maximum capacities. Such a marker or guaranteed channel is preferably selected from outside the normal data signal band while still being at a wavelength or wavelengths that experience gain (such as one or more OSC and other telemetry channel wavelengths), or may be located at any other suitable wavelength or wavelengths. However, the use of in-band wavelengths, as the guaranteed or marker channels, for computing the power ratio by the controller 120 can also be done.

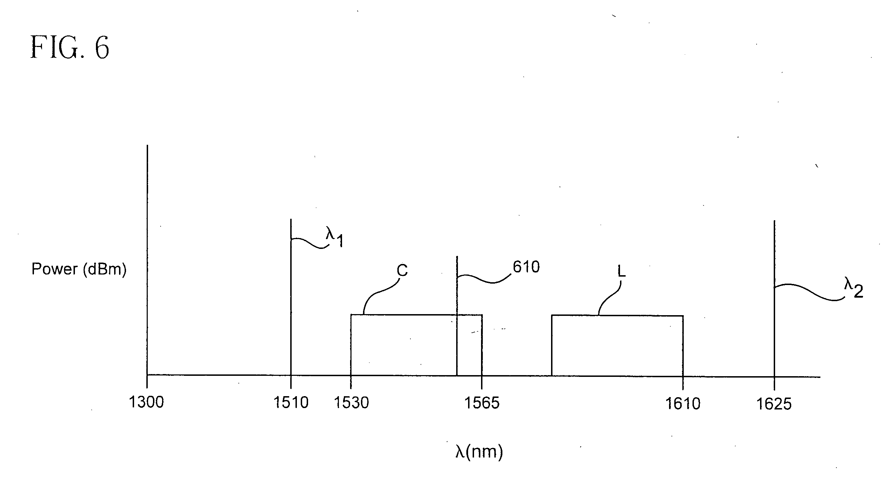

Referring to FIG. 6, first and second wavelengths $\lambda 1$ and $\lambda 2$ have a power level greater than about 0dBm at the monitor point 112 in FIG. 1 and within a bandwidth from about the singlemode cut-off wavelength for the fiber to the highest wavelength of the fiber where the attenuation of the fiber is greater than 2dB from the attenuation at the singlemode cut-off wavelength for the fiber. Preferably, the first and second wavelengths $\lambda 1$ and $\lambda 2$ are selected such that the first wavelength $\lambda 1$ is shorter than the signal bandwidth of the C-band or L-band, for example. In addition, the second wavelength $\lambda 1$ is longer than the signal bandwidth of the C-band or L-band for the in-band data signals.

For providing these first and second wavelengths $\lambda 1$ and $\lambda 2$, preferably supervisory channels are coupled to the fiber. There are several ways in which such channels can be coupled, using either 3 or 4 -port filtering devices, such as WDM or OSC filters to achieve the same overall functionality as in FIG. 1. Taking a 3-port device as an example, a reflective isolator longitudinal body, such as described in Patent US 6,417,964 can be a three, four or other multi-port optical device to serve as the first or second channels.

Instead of the nodes being transmitting or receiving terminals, as in FIG. 1 or 101 and 103 in FIG. 7, a number of optical amplifier configurations, other than shown in FIG. 1, can be located at the nodes 112 and 114 that continuously monitor wavelength-dependent loss as an indictor of fiber bend.

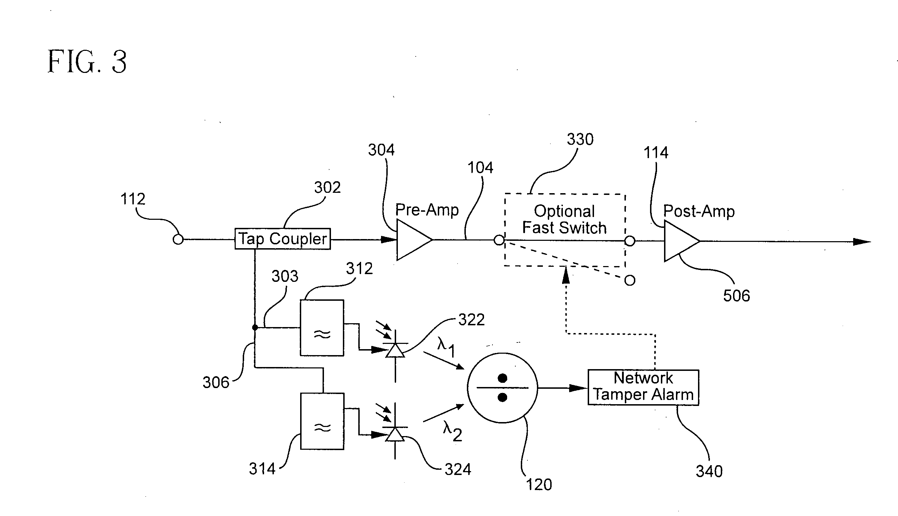

Referring to FIG. 3, a first embodiment of an optical amplifier with tamper monitoring via wavelength-dependent power monitoring is shown. A power tap coupler 302 at the input of a first amplifier 304 which can be a pre-amplifier taps a small percent of the total input (~1%) which is split into two parts that are incident on filtered photodetectors 322 and 324. A change in the ratio of two wavelengths or wavelength bands is indicative of a fiber or cable bend.

As shown in FIG. 3, the pre-amplifier 304 has the power tap 302 at the front end for taking a fraction of the light (~1%) and splitting it into two paths 303 and 306 that are incident on filtered photodetectors 322 and 324 for providing a power ratio between the two wavelengths $\lambda 1$ and $\lambda 2$ filtered by the filters 312 and 314 as measured by the controller 120. Out-of-band power is preferable to in-band power for measuring the power ratio between the two different wavelengths because the input tap 302 or filters 312 and 314 used to extract the in-band monitor power will add loss at the signal wavelengths, from about 1530nm to 1565nm, for the C-band and hence degrade the signal-to-noise of the amplifier 304. The possible out-of-band power sources can be from amplified spontaneous emissions, two out-of-band optical supervisory channels (OSC), or other guaranteed or marker channels. If using the OSC channels, one OSC channel is preferred to have a shorter wavelength (e.g., 1510 nm) and one having a longer wavelength (e.g., 1625 nm) than the expected in-band wavelengths.

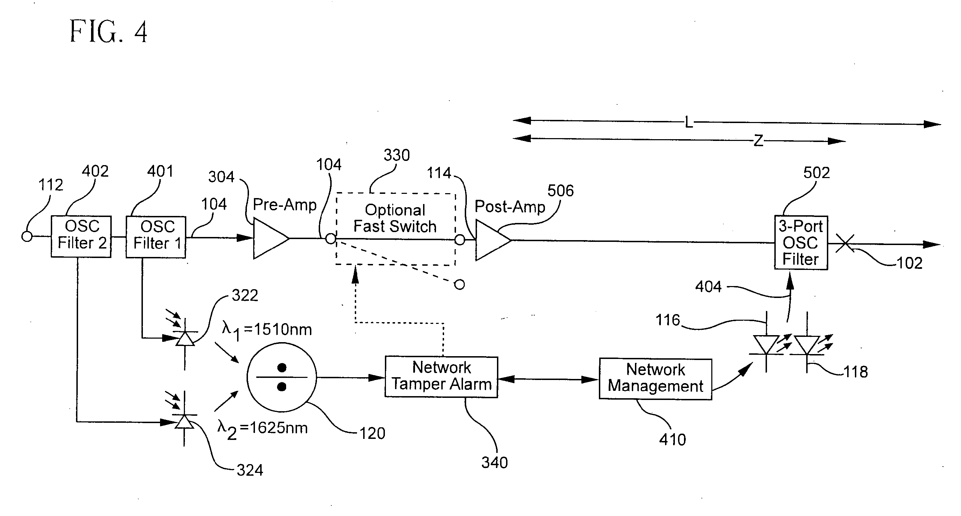

Referring to FIG. 4, a second embodiment of an optical amplifier with tamper monitoring via wavelength-dependent power monitoring is shown. Instead of the tap coupler 302 and the associated pair of filters 312 and 314 of FIG. 3, a pair of drop filters 401 and 402 are inserted at the input of the first amplifier 304. In this example, the filters 401 and 402 are filtering at the exemplary OSC wavelengths of 1510 and 1625 nm and are coupled to the photodetectors 322 and 324. This alternate configuration uses the filters 401 and 402 at the input of the first amplifier 304 to redirect out-of-band light to the two photodetectors 322 and 324.

For generating the first and second monitored wavelength or channels, preferably at least two inexpensive, broad wavelength spectrum Fabry-Perot lasers 116 and 118, each at one of the guaranteed, marker or others wavelengths, such as a supervisory channel (OSC) at a wavelength of 1510 nm (typically for the C-band of erbium amplification) and 1625 nm (typically for the L-band of erbium amplification), respectively transmits information on the health of the transmission link 104 between amplifier huts or nodes at a low data rate. At each set of pre and post amplifiers, the OSC signal is extracted with an optical filter 401 and 402 at the input to the pre- amplifier 304 of FIG. 4, electronically detected and re-injected onto the fiber 104 by the OSC filters 502 at the amplifier output of the post amplifier 506 for propagating in a feedforward direction. Preferably the pair of optical supervisory channel (OSC) filters 401 and 402 are inserted before the pre-amplifier to direct the light from the OSC wavelength 1510 nm (for C-band amps) or 1625 nm (for L-band amps) onto a respective photodiode (PD) 322 and 324. OSC information such as system continuity is analyzed by the network management system 410. New information is generated and re-injected onto the transmission fiber 104. Although not shown, other information important for network management, other than power ratio information, is also coupled appropriately to network management.

For a preferred case of using the optical supervisory channels to measure power at the OSC wavelengths to obtain 1625 to 1510 nm power, their loss ratio is 0.62 dB for SMF28 fiber for the mandrel radius of curve 206 in FIG. 2. The system 10 would be set to monitor and alarm if a change in the power ratio of just below this value is detected by the controller 120. Hence, the alarm would indicate when the variation of the current power ratio is changed from the previously measured value by an increment that is greater than about 0.3 dB to about 0.6 dB in absolute values. However, the incremental change could be as low as from about 0.2 to 0.25 dB. This change should result from a change in at least one of the first and second wavelength if the fault is due to a fiber security breach at any location along the fiber. Thus, being able to detect and alarm a tapping event provides the network user increased confidence in the higher security level in the optical data transmission. The power ratio change can also alarm for small changes in loss that have not yet affected the signal bit error rate to indicate a naturally-occurring event requiring further investigation. Furthermore, the power ratio change can also alarm for fiber jamming when a rouge optical power is used to generate fiber nonlinearities on top of the existing optical signal channels.

When monitoring a power ratio, unwanted rogue power 610 in FIG. 6 for the purpose of signal jamming can also be detected. If this rogue optical power 610 is injected into the fiber for the purpose of disrupting transmission by introducing excessive fiber nonlinearities, the monitor power ratio would also change due to a differential Raman gain on the monitoring signals caused by the rogue power acting as a Raman pump. The 1625 to 1510 nm ratio would increase, instead of decrease (negative value for the power ratio change) for the tampering and natural loss condition, and again the alarm would be set to monitor a change in steady state power. Hence, depending on the sign of the power ratio variation, an alarm could indicate when the fiber security breach is from either a fiber tap detected or a rogue signal inserted at a Raman coupled point at any location along the fiber. For Raman, a positive power ratio change on the order of 0.3 dB (just greater than the power measurement uncertainty) could indicate jamming.

An optional, fast optical switch 330 can turn off the data flow faster than it takes to send an alarm 340 back to the head end protection switch (not shown) at the transmitter 101 of FIG. 1, thereby keeping less data buffered in the fiber from being intercepted. The optional fast blocking switch 330 keeps data from continuing down the fiber 104 after a change in the loss ratio is detected by the controller 120. Hence, the signal blocking switch 330 alarmed to a fiber tap detection is locally-placed within the localized amplifier stage as a practical implementation. This switch 330 advantageously cuts signal access faster than a switch at the transmitter 101 of FIG. 1. The added secure functionality is thus provided by the fast, optical blocking switch 330 located within the nearest upstream optical amplifier at the input node of the second or post amplifier 506 to minimize the data lost to the tapping attack. Relying on protection switching from the transmitter site 101 of FIG. 1 is not preferred because it takes too long to shut off the flow of data to an unauthorized user (~50 ms). By placing the switch 330 at the closest possible location, data loss is minimized because only the fiber downstream of the nearest upstream amplifier 506 acts as an optical buffer to the unintended user. The downstream fiber acts as an optical buffer in that the data in that part of the fiber can not be stopped from being intercepted even if the upstream amplifier 506 blocks continued data transmission.

Referring back to FIG. 1 for illustration, the length of fiber from the upstream amplifier 506 to the fiber cut is denoted as "z". The potential data lost (D) is:

$$D = B*(L-z)/v \qquad \text{(Eq. 1)}$$

where B is the data rate and v is the velocity of light in the fiber and L is the length of the fiber link segment 104.

The present invention teaches a way to minimize the length of the optical buffer. First consider that the strength of the optical signal near the upstream amplifier 506 makes it the most likely location for tapping, i.e, $z << L$. So according to Equation 1, downstream monitoring loses roughly BL/v worth of data even before the tap is detected. However, upstream monitoring can be achieved by counter-propagating in a backwards path 704 the monitoring signals with respect to the data signals as shown in FIG. 1 in contrast to the feedforward path 404 of FIG. 4.

In the counter-propagating or backwards path 704 of FIG. 1, the same at least two inexpensive, broad wavelength spectrum Fabry-Perot lasers 116 and 118 of FIG. 4, each at one of the guaranteed, marker or others wavelengths, such as a supervisory channel (OSC) at a wavelength of 1510 nm (typically for the C-band of erbium amplification) and 1625 nm (typically for the L-band of erbium amplification), respectively transmits information on the health of the transmission link 104 between amplifier huts or nodes at a low data rate for generating the first and second monitored wavelength or channels. At each set of pre and post upstream amplifiers, the OSC signal is extracted with a set of optical filters 312 at the output of the previous or downstream post-amplifier 506 of FIG. 1, electronically detected and re-injected onto the fiber 104 by the OSC filters 106 and 108 at the amplifier input of the pre-amplifier 508 for propagating in a feedbackward direction. Preferably the pair of optical supervisory channel (OSC) filters 312 are inserted after the post-amplifier to direct the light from the OSC wavelength 1510 nm (for C-band amps) or 1625 nm (for L-band amps) onto a respective photodiode (PD) 322 and 324.

In the case of counter-propagation, the lost data is only Bz/v. More preferred is bi-directional monitoring. This bi-directional monitoring could be implemented by a combination of FIG. 1 and FIG. 4, as shown in FIG. 7.

Referring to FIG. 7, bi-directional monitoring is shown where access can be cut independently of the tap location. Bi-directional monitoring would require a different pair of OSC wavelengths for the forward and backward directions if circulators are not used. The alarm would still need to be conveyed to the first node upstream of the tapping location which already occurs with the switch 330 of system of FIG. 1.

The detection is not only possible between the pre-amp and post-amp of a two-stage amplifier but with any other fiber path desired, with none, one, two, or more amplifiers included in the selected fiber span because the detection circuitry is separate to the path taken by the data through the amplifier. For example, the OSC wavelengths for monitoring the integrity of the network can be present even with no amplifiers in the system 10. The hashed block represent a system with only the transmitter 101 and receiver 103 present with their interleaving OSC filters, detectors, and lasers.

As another example, the arrangement of lasers 116, 118 and 116', 118' and photodiodes 322, 324, and 322', 324' would provide bidirectional monitoring to the span of fiber located between the two 2-stage amplifiers 304, 506 and 304', 506'.

On the other hand, the detection path can be within a single two-stage amplifier site. Preferably, the detection path would be coupled at the input of the pre-amplifier 304"of each network node or amplifier site.

In the more general detection path, a pair of photodiodes 322'' and 324'' receive the OSC wavelengths λ4 and λ3 sent by the previous node and a pair of OSC filters 312' couple these wavelengths out of the fiber before the pre-amplifier 304 in a feedforward direction. A pair of lasers 118" and 116" inject the OSC wavelengths λ4 and λ3 through two OSC filters 106' and 108' into the fiber and toward the next amplifier 304.

In a feedbackward path, a pair of lasers 116'''' and 118'''' inject the OSC wavelengths λ1 and λ2 through two OSC filters 502 into the fiber back towards the previous node which is on the post-amplifier side of the previous 2-stage amplifier. A pair of photodiodes 322''' and 324''' detect the OSC wavelengths λ1 and λ2 sent by the downstream node and a pair of OSC filters 401' and 402' to couple these wavelengths out of the fiber.

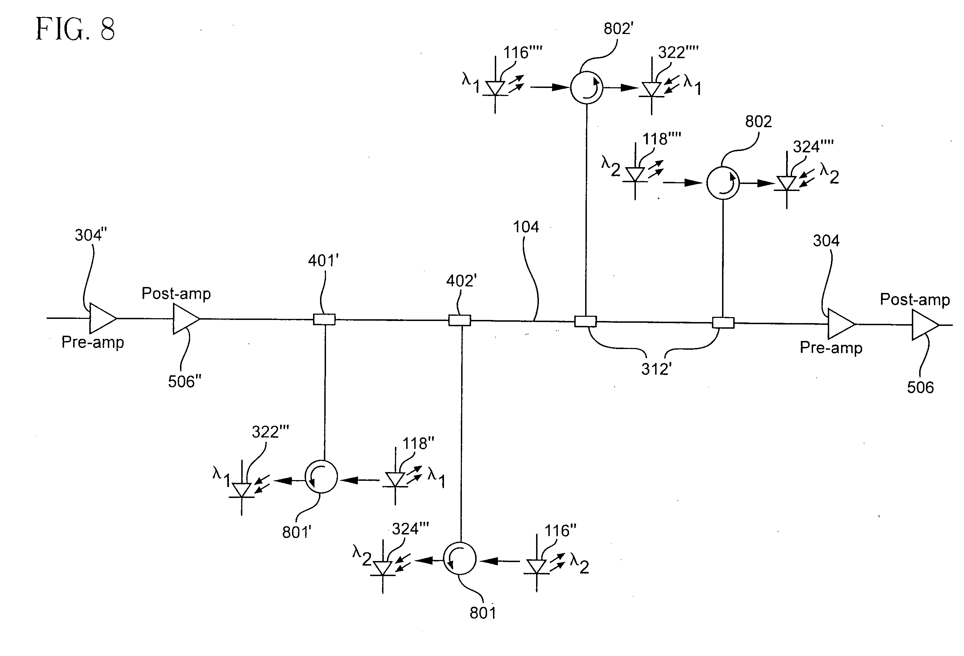

Referring to FIG. 8, a simpler embodiment for a portion of the repeated bi-directional monitoring of FIG. 7 is shown. In this case, instead of using two sets of wavelengths, circulators 801, 801', 802, and 802' are used with the amplifiers to use the same pair of OSC wavelengths for the forward and backward directions. The alarm would again be conveyed to the first node upstream of the tapping location which already occurs with the switch 330 of system of FIG. 1.

Similar to FIG. 7, the arrangement of lasers 116'''', 118'''' and 116', 118' and photodiodes 322'''', 324'''', and 322''', 324''' would provide bidirectional monitoring to the span of fiber 104 located between the two 2-stage amplifiers 304, 506 and 304'', 506'' in FIG. 8 but with the use of less filters. In a feedbackward path, the pair of photodiodes 322''' and 324''' receive the OSC wavelengths λ1 and λ2 sent by the previous node and a pair of WDM filters 401' and 402' along with the circulators 801' and 801 couple these wavelengths out of the fiber before the pre-amplifier 304". Continuing on the feedbackward path, the pair of lasers 116'''' and 118'''' inject the OSC wavelengths λ1 and λ2 through two WDM filters 312' and a pair of circulators 802' and 802 into the fiber back towards the previous node which is on the post-amplifier side of the previous 2-stage amplifier.

In a feedforward path, the pair of photodiodes 322'''' and 324'''' detect the OSC wavelengths λ1 and λ2 sent by the upstream node and a pair of WDM filters 312' and circulators 802' and 802 couple these wavelengths out of the fiber. A pair of lasers 118" and 116" inject the OSC wavelengths λ3 and λ4 through two WDM filters 401' and 402' and the circulators 801' and 801 into the fiber and toward the next amplifier 304.

An important function in a secure optical network is the ability to precisely locate the position of any suspected interference with the system. This can be done using the technique of optical time domain reflectometry (OTDR). An OTDR launches a pulse of light in to an optical fiber and monitors the light reflected in the fiber by Rayleigh scattering. The time dependence of the reflected light provides information about the loss as a function of position along the fiber. However conventional optical fiber transmission links are unidirectional because of input and output isolators within the amplifiers. These isolators prevent OTDR from being performed on a whole link by blocking the Rayleigh scattering from the OTDR pulse.

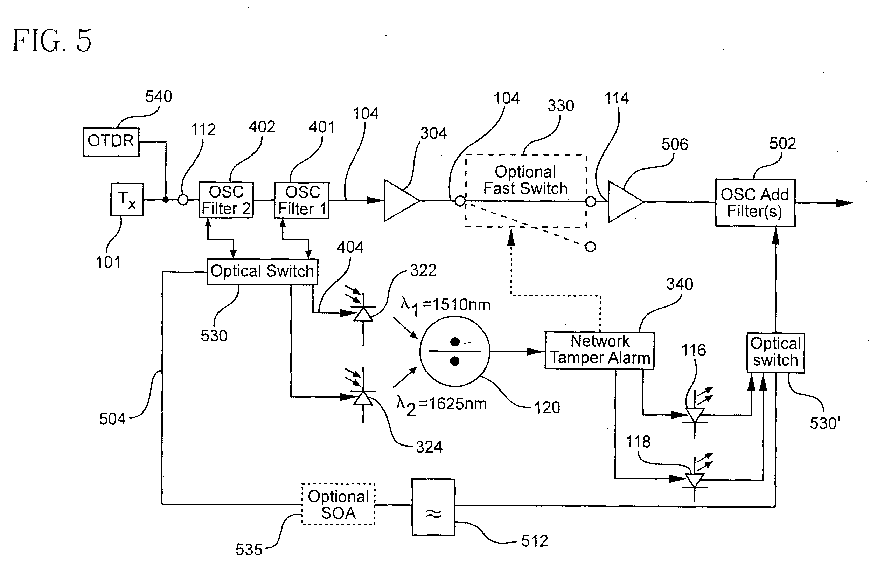

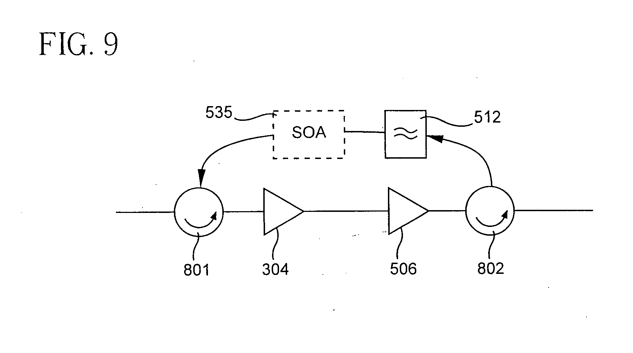

Referring to FIG. 9, one way to get around this problem is to provide an alternative path for the backscattered light as demonstrated. In this arrangement the isolators at the pre-amplifier 304 input and post-amplifier 506 output are replaced by circulators 801 and 802. Connecting the two circulators 801 and 802 provides a path for backscattered light to return to a single OTDR unit 540 of FIG. 5 employed at the start of the transmission link. The path for the backscattered OTDR light optionally includes a filter 512 selected to only pass the OTDR wavelength and an optical amplifier 535, preferably an SOA, to provide gain to the OTDR signal.

Referring to FIG. 5, another embodiment of a secure amplifier is shown, combining the OTDR along with the other two inventive functions of power-ratio change detection and fast-blocking switching. Localization, the third inventive function, is enabled by providing a conventional backward propagating path 504 with optional amplification for Rayleigh scattering with the OSC drop filters 401 and 402 and a corresponding set of OSC add filters 502 substituting for the conventional pair, of input and output isolators, respectively. The OSC add filters block 502 can be the same individual OSC add filters 106 and 108 of FIG. 1 but aligned in an opposite direction depending on whether feedforward or counter-propagating direction of the monitored detection is desired for using the appropriate add or drop filter.

On the post-amp side of the amplifier there is a pair of OSC laser sources 116 and 118 connected to the OSC add filters 502. There is also a switch 530' on this side of the amplifier to switch between the OSC laser sources 116 and 118 and the OTDR path 504.

Similarly, another optical switch 530 is connected to the OSC drop filters 401 and 402. The optical switch 530 can direct wavelength dependent monitor light for tap detection in one setting by the controller 120 or back-propagating Rayleigh scattering in the other setting for the back path 504. Alarming 340 from the input of the first amplifier 304 back to the network management center 410 of FIG. 4 should also be used to initiate a protection switching re-route before any data is lost to the intended user. It is to be appreciated that switches 530 and 530' are only used for the OTDR 540, and not as part of the protection switched route for the signal.

With either forward or backward monitoring, the fast optical switch 330, is preferably a semiconductor optical amplifier (SOA) which can switch very fast with a demonstrated fast switching time of 1 ns.

Switches 530 and 530' are more conventional optical switches Conventional optical switches can be opto-mechanical devices or other types of optical components moving within the switch to direct light from an input fiber to a choice of output fibers. An example of such a fiber-optic switch is the MOM series available from JDS Uniphase.

An optional SOA 535 can be used in the backwards path 504 to provide further gain to the OTDR signal. Hence, a signal blocking switch 330 alarmed to a fiber tap detector 322 and 324 locally-placed within the amplifier is taught by the present invention.

The few additional components added to provide continuous power-ratio monitoring of the fiber link 104 for detection of any change in the wavelength-dependent loss of the fiber are relatively low cost and readily available. Continuous monitoring minimizes the latency of a tap detection. Targeting smaller loss (<1 dB), as taught, allows the system manager instant feedback on the health of the optical link which would cause errors in the bit stream. Using OSC wavelengths insures access to relatively high volume, standard lasers 116 and 118 and filters 106, 108, 312 for example. These wavelengths are already in use and components to extract and detect them already packaged in amplifiers. What is new, according to the teachings of the present invention, is the use of both OSC channels and the continuous monitoring of their power ratio. Some of the problems this invention solves which were unaddressed by prior commercially-available devices are the detection and localization of small power drops indicative of a fiber tapping event.

Alarming with the network tamper alarm 340 could also initiate a transmission loss link characterization by the network management 410 of FIG. 4 to determine if the wavelength-dependent loss is a true tapping event. Tapping loss is highly localized (< 10 cm) and is likely outside a secure repeater hut facility. Measuring the exact location and extent of the loss allows a system management operator at a centralized location to determine if the wavelength-dependent loss alarm is a tapping or a natural event. If it is a false alarm due to a natural event, the operator via the network management control 340 can reset the protection switch 330 to redirect the data back along the original path 104.

Another aspect of the invention is the teaching of a single, central-office OTDR 540 and specially-designed in-line amplifiers allowing for Rayleigh backscattering along the entire link for loss localization. Conventional amplifiers have input and output isolators to block counter-propagating signal power. The present invention teaches a configuration to preferentially pass the backscatter of the OTDR signal along the counter-propagating path 504 but not the data signals (which implies that the OTDR signal as transmitted by the Rayleigh filter 512 is also out of the signal band) on the forward path 104.

There are several possibilities in choosing the wavelength of the OTDR 540. If input and output circulators were used instead of OSC filters before and after a two-stage amplifier, the OTDR 540 can operate in-band because the OTDR pulse would need amplifying between fiber spans. The back-propagating path 504 is required because of isolators already included in the amplifiers which would prevent the back-scattered OTDR signal from returning to the OTDR 540 at the transmitter 101.

On the other hand, using OTDR filters as in FIG. 5, the OTDR wavelength will preferably operate at one of the OSC wavelengths i.e. out of band. In normal operation when data is being sent through the network via the fiber 104, the OTDR 540 is not in use but the OSC channel filters 401, 402, and 502 are being used to monitor security. In this case the optical switches 530 and 530' at the input and output nodes connect the OSC laser sources 116 and 118 and photodiodes 322 and 324 to the fiber 104. If a tapping event is suspected, data traffic will be switched to a separate protection route and the optical switches 530 and 530' in the back-propagating loop 504 are used to direct the OTDR signal at one of the OSC wavelengths around the two-stage amplifier.

Optionally, the filter 512 transmits the OTDR signal at whatever selected wavelength and filters out the in-band signals. Filter design of the transmitted vs. reflected bands insures sufficient crosstalk to isolate the bidirectional signals.

Add/drop filters 401, 402, and 502 or other similar components for the inventive completely secured amplifiers, such as input and output circulars for conventional unsecured amplifiers, act as isolators to the forward propagating data signals and redirects the counter-propagating Rayleigh signal around the amplifier in the backward direction 504.

The backward path 504 has the optional SOA amplifier 535 so that the dynamic range limit of the centralized OTDR is not exceeded. Gain from the broadband SOA 535 can insure the required dynamic range of the signal through the entire transmission link. Moreover, gain of the SOA 535 needs be controlled to keep the OTDR wavelength within the bandwidth of the filter 512 from lasing upon spurious back-reflections.

Multi-path interference is not an issue since the Rayleigh signal is not within the data signal band. The second optical switch 530 is used to select forward propagating light onto the photodetectors 322 and 324 in normal transmission mode of operation and re-injection of Rayleigh scattered light in OTDR loss characterization mode of operation in the backwards Rayleigh path 504.

Although the pass-through OTDR configuration is directed toward tap detection, it also has great benefit for any fault location or loss detection event. The single OTDR 540 placed at the transmitter 101 can find the loss drop in seconds rather than the hours it would take a trained engineer to drive to the correct repeater hut. Optionally, designing multiple pass-through wavelengths gives a better picture of the nature of the loss, specifically. The design is flexible enough to be used with any OTDR signal wavelength.

It will be apparent to those skilled in the art that various modifications and variations can be made to the present invention without departing from the spirit and scope of the invention, such as substituting in circulators for the drop or add filters. Thus it is intended that the present invention cover the modifications and variations of this invention provided they come within the scope of the appended claims and their equivalents.

## Claims

1. A system for detecting a small fiber loss on a fiber, the system comprising:

   a first channel having a first wavelength coupled to the fiber;
   a second channel having a second wavelength different than the first wavelength, the second channel coupled to the fiber; and
   at least one photodetector circuitry coupled to the fiber at a monitor point for detecting a change in the power ratio between the first and second channels for detecting a small fiber communication loss at any location along the fiber.

2. The system of claim 1, further comprising an alarming switch for alarming and disconnecting the fiber at a switch point within an amplifier hut close to the monitor point.

3. The system of claim 1, further comprising an optical time domain reflectometer (OTDR) at a transmitter for launching an OTDR pulse in a switchable OTDR feedback path coupled to the monitor point for determining the location along the fiber of the small fiber loss.

4. The system of claim 3, further comprising a semiconductor optical amplifier (SOA) coupled in the switchable OTDR feedback path with the fiber for amplifying the OTDR pulse.

5. The system of claim 1, wherein the first and second channels comprise circuitry for generating a first and second optical supervisory channels (OSCs).

6. The system in accordance with claim 5 wherein the at least one photodetector circuitry further comprises circuitry for indicating that the fiber integrity is intact if the change in ratio detected from a previously measured value is approximately equal to zero and for indicating that the fiber integrity is breached if the change in ratio detected is much greater than zero.

7. The system in accordance with claim 6 wherein the first and second OSC channels comprise a first laser and a second laser correspondingly connected to a first and a second OSC filter for providing the first and second wavelengths at approximately 1510nm and approximately 1625nm.

8. In a system having at least two nodes connected by a fiber path, a method for detecting a fiber condition along the fiber path, the method comprising the steps of:

providing a feedback path to couple with the fiber path to form a feedback loop; and

measuring the fiber condition on the fiber path in response to a detected change along the feedback path.

9. The method in accordance with claim 8 wherein the measuring step comprises the steps of:

generating a first marker wavelength on the feedback loop;

generating a second marker wavelength on the feedback loop, wherein the generated marker first and second wavelengths are first and second optical supervisory channels (OSCs) having different wavelengths each having a different wavelength dependent fiber attenuation;

detecting, at one of the nodes, a power ratio between the generated first marker wavelength and the second marker wavelength;

determining that there is a fiber integrity breach condition when the detecting step indicates a ratio change from a previously measured value much greater than zero; and

determining that there is no fiber integrity breach condition when the detecting step indicates a ratio change from the previously measured value approximately equal to zero.

10. The method according to claim 9 wherein the providing step comprises the steps of:

replacing isolators of amplifiers with circulators in the fiber path;

inserting an amplifier and a filter for enhancing the signal on the feedback path for measurement in the fiber path.

FIG. 1

FIG. 2

Bend loss in SMF28

EP 1 564 913 A2

FIG. 3

EP 1 564 913 A2

FIG. 4

EP 1 564 913 A2

# FIG. 5

EP 1 564 913 A2

EP 1 564 913 A2

FIG. 6

FIG. 7

FIG. 8

FIG. 9

EP 1 564 913 A2